# EUROPÄISCHE PATENTANMELDUNG

(11) **EP 2 738 577 A1**
(43) Veröffentlichungstag der Anmeldung: **04.06.2014**
(21) Anmeldenummer: 13401105.5
(22) Anmeldetag: 20.09.2013
(51) Int. Cl.: G01V 3/10

(54) **Vielfach-Modus-Objektdetektor und Verfahren zur Detektion von Objekten**

(71) Anmelder: Vallon GmbH, 72800 Eningen (DE)
(72) Erfinder:
(74) Vertreter: Klocke, Peter

(57) **Zusammenfassung**

Vielfach-Modusdetektor, bei dem Sende- und Empfangsweg über dieselbe Spule laufen. Hierzu sind wahlweise zur der Sende- und Empfangsspule Widerstände, Kondensatoren, Spulen in beliebiger Kombination zuschaltbar, um in einer beliebigen Folge zwischen Pulsinduktionsbetrieb, Pulsbetrieb mit abklingender Schwingung und Sinusbetrieb hin- und herzuschalten. Hierzu wird die Sende- und Empfangsspule über elektrisch steuerbare Schalter mit verschiedenen Impedanzen beschaltet. Zusätzlich können auch noch andere Sensoren zugeschaltet werden und mit derselben Signalauswerteinrichtung ausgewertet werden. Bei dem Detektor ist keine aufwändige Abstimmung von Sende- und Empfangsspule mehr erforderlich. Darüber hinaus können dem Benutzer durch die verschiedenen Betriebsmodi genauere Informationen über das gefundene Objekt bereitgestellt werden, was die Objektklassifizierung wesentlich erleichtert.

## Beschreibung

Die vorliegende Erfindung betrifft einen Vielfach-Modus-Objektdetektor sowie ein Verfahren zur Detektion von Objekten in einem Vielfach-Modus-Objektdetektor.

Bekannte Standardmetalldetektoren liefern immer entsprechend ihrer speziellen Ausgestaltung nur eine begrenzte Aussage über das gefundene Objekt. Die Detektoren weisen eine oder mehrere Sende- oder Empfangsspule(n) auf und werden mit unterschiedlichen Betriebsarten betrieben. Bekanntlich wird zwischen Pulsmessung und Wechselstrommessung unterschieden. Bei der Pulsmessung werden über die Sendespule periodisch Pulse eines Magnetfelds ausgesendet. Diese erzeugen in metallischen Objekten in der Umgebung der Spule Wirbelströme. Die Wirbelströme wiederum verursachen in der Empfangsspule eine Signaländerung, die unmittelbar nach dem Ausschalten des Sendepulses als Spannung messbar ist. Je nach zeitlichem Verlauf und Dauer dieser Wirbelstromantworten auf unterschiedlich lange Pulse und Pulsfolgen kann auf verschiedene Metalle und auf die Größe der metallischen Objekte geschlossen werden.

Bei der Pulsmessung wird noch unterschieden zwischen reinem Pulsinduktionsbetrieb (PI) bei der die Sende- bzw. Empfangsspule mit der Parallelschaltung eines reinen Ohmschen Widerstandes so gedämpft wird, dass der Spulenstrom nach dem Abschalten des Sendestroms möglichst schnell abklingt, und Pulsbetrieb mit abklingender Schwingung (PIR), bei dem die Schwingungsdämpfung und Eigenfrequenzverschiebung aufgrund eines Objekts bei mindestens einer Frequenz ausgewertet wird. Hier wird der Sende- bzw. Empfangsspule zusätzlich noch ein Kondensator parallel geschaltet, so dass ein Schwingkreis entsteht.

Im Wechselstrombetrieb (CW) wird ein kontinuierlicher, meist niederfrequenter Strom in einer Sendespule erzeugt und die Amplitude ausgewertet. Hierbei formt die Empfangsspule mit einem parallel geschalteten Kondensator einen Schwingkreis. Die Empfangsspule kann durch ändern des Kondensatorwertes in ihrer Resonanzfrequenz geändert werden, so dass es möglich ist, das Empfangssignal auch bei mehreren Frequenzen auswerten zu können.

In der Praxis gibt es daher mehrere verschiedene Detektoren, die von der Bedienperson benutzt werden müssen. Im PI-Betrieb kann nur auf das Objekt als solches rückgeschlossen werden. Eine Aussage über das Material wird in der Regel nicht geliefert. Bei einem Detektor mit RPI-Betrieb ist ein Rückschluss auf das Material viel genauer möglich, beispielsweise ob es sich um Eisen oder nicht Eisen handelt. Dieser Betrieb hat jedoch eine geringe Detektionsempfindlichkeit. Im CW-Betrieb ist ebenfalls eine Aussage über Objekte und deren Beschaffenheit möglich. Schwach leitfähige Objekte können ebenfalls gut gefunden werden. Ein Nachteil ist die begrenzte Einsetzbarkeit in unkooperativern Böden oder in Wasser.

Infolge dessen besteht ein Bedarf nach Detektoren, die den Betrieb von verschiedenen Modi erlauben. So wird in der US 6,967,574 B1 ein Detektor vorgestellt, der eine Kombination von einem PI- und CW-Detektor ist. Hierbei wird wie üblich eine separate Sendespule und eine separate Empfangsspule verwendet.

Der vorliegenden Erfindung liegt daher die Aufgabe zugrunde, einen verbesserten Vielfach-Modus-Detektor vorzuschlagen, der alle drei der vorstehend beschriebenen Betriebsarten für die Suche von leitfähigen Objekten erlaubt und gegebenenfalls in Kombination mit anderen Sensoren auch für nichtmetallische Objekte benutzt werden kann.

Diese Aufgabe wird durch ein Vielfach-Modus-Objektdetektor gemäß Anspruch 1 sowie ein Verfahren gemäß dem nebengeordneten Verfahrensanspruch gelöst. Weitere vorteilhafte Ausgestaltungen sind den jeweiligen rückbezogenen Unteransprüchen zu entnehmen.

Gemäß der Erfindung verwendet der Vielfach-Modus-Objektdetektor für den Sende- und Empfangsweg nur eine Spule. Diese dient zuerst zum Senden und anschließend zum Empfangen des vom Objekt zurückkommenden Signals. Dieser Sende- und Empfangsspule sind elektrische Schaltungskomponenten, wie Widerstände, Kondensatoren und/oder Spulen, wahlweise zuschaltbar, so dass dadurch ein dem gewünschten Modus entsprechender Sende- und/oder Empfangsschaltkreis gebildet wird. Des weiteren ist ein Sendesignal-Generator für die Sende- und Empfangsspule, eine elektronische Signalauswerteeinrichtung und eine elektronische Steuereinrichtung vorgesehen, wobei mittels der Steuereinrichtung in beliebiger Folge und Dauer verschiedene Detektionsbetriebsarten ausführbar sind.

Gemäß einer weiteren Ausbildung der Erfindung sind die zuschaltbaren elektrischen Schaltungskomponenten mindestens ein Widerstand und/oder mindestens ein Kondensator und/oder mindestens eine Spule, die über elektronisch steuerbare Schalter wahlweise zu der Sende- und Empfangsspule zuschaltbar sind. Durch diese Ausgestaltung kann die Sende- und Empfangsspule mittels der Steuereinrichtung mit verschiedenen Impedanzen verschaltet werden. Im PI-Modus und PIR-Modus sind beim Senden keine Impedanzen zugeschaltet. Beim Empfang werden im PI-Modus ein oder mehrere Widerstände und im PIR-Modus ein oder mehrere Widerstände und ein oder mehrere Kondensatoren und gegebenenfalls ein oder mehrere Spulen je nach Größe der Komponenten zur Sende- und Empfangsspule zugeschaltet. Im CW-Modus sind beim Senden und Empfangen ein oder mehrere Widerstände und ein oder mehrere Kondensatoren und gegebenenfalls ein oder mehrere Spulen je nach Größe der Komponenten zur Sende- und Empfangsspule zugeschaltet. Das Zuschalten der Spulen erfolgt nur dann, wenn die Wirkung der Send- und Empfangsspule in dem Schwingkreis geändert werden soll.

Gemäß einer weiteren Ausbildung der Erfindung ist die elektronische Signalauswerteeinrichtung mittels elektronischer Schalter an verschiedene Sensoren schaltbar. Dadurch ist es möglich, zusätzlich zu der Sende- und Empfangsspule als Metallsensor auch andere Sensoren für Objekte aus anderen Materialien, wie beispielsweise Magnetometer, GPR-, Infrator- oder Ultraschallsensoren, zu betreiben, wobei die elektronische Steuereinrichtung den jeweiligen Sensor mit seinem entsprechenden Modus aktiviert und die elektronische Signalauswerteeinrichtung für den Empfang dem jeweiligen Sensor zuschaltet, so dass mit dem erfindungsgemäßen Vielfach-Modus-Objektdetektor nicht nur metallische, sondern auch andere Gegenstände detektiert werden können.

Gemäß dem erfindungsgemäßen Verfahren erfolgt die Detektion von Objekten durch die folgenden Schritte:
- Modus abhängiges Zuschalten von elektrischen Bauelementen entsprechend eines vorgegebenen Detektionsmodus zu einer Sende- und Empfangsspule als Sensor;
- Senden eines Detektionssignals mittels eines parallel zu den elektrischen Bauelementen geschalteten Sendesignal-Generators;
- Modus abhängiges Zuschalten von elektrischen Bauelementen entsprechend des vorgegebenen Detektionsmodus zu der Sende- und Empfangsspule
- Empfangen des von dem Objekt gelieferten Signals mittels der Sende- und Empfangsspule; und
- Auswerten des empfangenen Signals mittels einer parallel zur Sende- und Empfangsspule geschalteten Auswerteeinrichtung.

Gemäß einer Ausbildung des Verfahrens werden mittels einer elektronischen Steuereinrichtung entsprechend dem Detektionsmodus die elektrische Bauelemente zugeschaltet oder nicht zugeschaltet, dann der Sendesignal-Generator zur Abgabe eines Sendesignals veranlasst, anschließend entsprechend dem Detektionsmodus elektrische Bauelemente zugeschaltet oder nicht zugeschaltet, und die Signalauswerteeinrichtung zugeschaltet und gesteuert, um das von der Sende- und Empfangsspule empfangene Signal auszuwerten. Im PI-Modus und PIR-Modus sind beim Senden keine Impedanzen zugeschaltet. Beim Empfang werden im PI-Modus ein oder mehrere Widerstände und im PIR-Modus ein oder mehrere Widerstände und ein oder mehrere Kondensatoren und gegebenenfalls ein oder mehrere Spulen je nach Größe der Komponenten zur Sende- und Empfangsspule zugeschaltet. Im CW-Modus sind beim Senden und Empfangen ein oder mehrere Widerstände und ein oder mehrere Kondensatoren und gegebenenfalls ein oder mehrere Spulen je nach Größe der Komponenten zur Sende- und Empfangsspule zugeschaltet. Das Zuschalten der Spulen erfolgt nur dann, wenn die Wirkung der Send- und Empfangsspule in dem Schwingkreis geändert werden soll.

Vorteilhafterweise werden nacheinander entweder gleiche oder verschiedene Detektionsmodi ausgeführt. Damit kann vollkommen variabel und den Erfordernissen angepasst die Detektion eines Objektes durchgeführt werden. Gemäß einer weiteren Ausbildung des Verfahrens können alternativ mittels der elektronischen Steuereinrichtung weitere Sensoren mit anderen Detektionsmodi gesteuert an die Signalauswerteeinrichtung zwecks Auswertung ihrer Empfangssignale angeschlossen werden.

Durch die Erfindung wird ein universeller Detektor bereitgestellt, der mit einfachen Mitteln zu realisieren ist. Der Detektor verwendet für den Sende- und Empfangsweg nur eine Spule, die den beschriebenen Betriebsarten in einer zeitlich hintereinander ablaufenden Folge betrieben werden kann. Der Sende- und Empfangsweg läuft über dieselbe Spule. Damit ist eine aufwändige Abstimmung von Sende- und Empfangsspule nicht mehr erforderlich, was die Störanfälligkeit des Geräts wesentlich verbessert. Zusätzlich kann der erfindungsgemäße Detektor in einer beliebigen Folge zwischen den verschiedenen Betriebsarten hin- und herschalten, so dass die Detektion mit einem Metallsensor mehr detektieren kann als bisher bekannte Detektoren. Dem Benutzer können durch die verschiedenen Betriebsmodi genauere Informationen über das gefundene Objekt bereitgestellt werden, was die Objektklassifizierung wesentlich erleichtert. Durch die Integration von Sensoren für Objekte aus anderen Materialien bei der Auswertung ist der Detektor vielseitig einsetzbar.

Die Merkmale der Erfindung ergeben sich aus der folgenden Beschreibung eines Ausführungsbeispiels in Verbindung mit den Ansprüchen und den Zeichnungen. Die einzelnen Merkmale können je für sich oder zu mehreren bei Ausführungsformen der Erfindung verwirklicht sein. Es stellen dar:
- Figur 1: ein Blockschaltbild der einzelnen erfindungswesentlichen Elemente des Sensors und
- Figur 2: ein Signalverlauf mit den verschiedenen Modi.

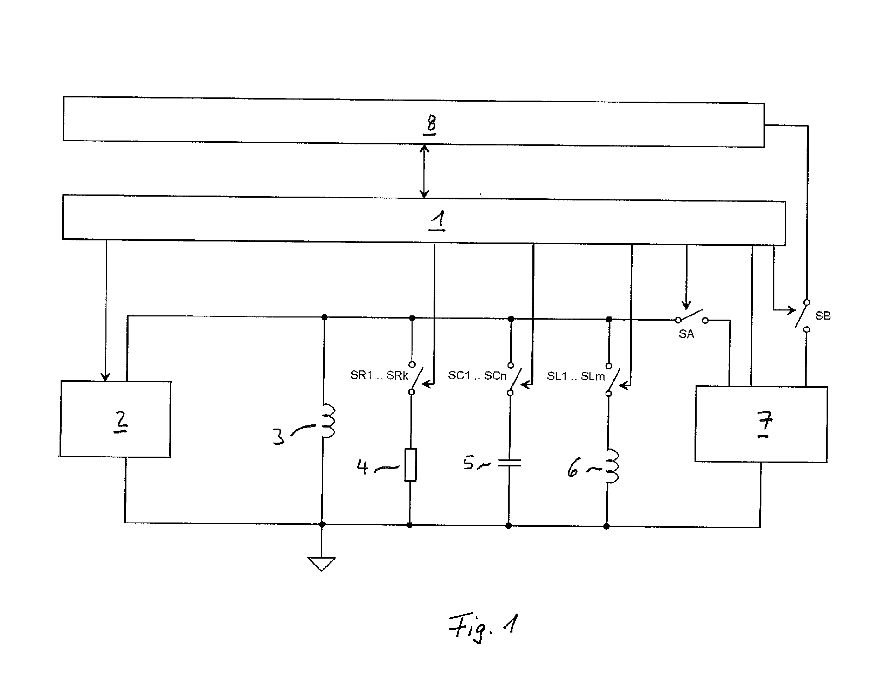

Figur 1 zeigt eine elektronische Steuereinrichtung 1, die einen Sendesignal-Generator 2, elektronische Schalter SR1....SRk, SC1....SCn, SL1....SLm, SA, SB und eine elektronische Auswerteeinrichtung 7 steuert. Des weiteren synchronisiert die elektrische Steuereinrichtung auch andere Sensoren , die mit der Bezugsziffer 8 angedeutet sind. Parallel zu dem Signalgenerator 2 ist eine Sende- und Empfangsspule 3 geschaltet. Zu dieser können Widerstände 4, Kondensatoren 5 und/oder Spulen 6 über die entsprechenden Schalter SR, SC bzw. SL zugeschaltet werden. Die elektrischen Schaltungskomponenten Widerstand 4, Kondensator 5 und Spule 6 stehen im Blockschaltbild gemäß Figur 1 als Symbol für einen oder beliebig viele kombinierbare Widerstände 4, Kondensatoren 5 oder Spulen 6. Diese können über eine entsprechende Anzahl von Schalter SR1...SRk für die Widerstände 4, SC1....SCn für die Kondensatoren 5 und SL1....SLm für die Spulen 6 zugeschaltet werden. Figur 1 zeigt nur eine Parallelschaltung der Komponenten 4,5 und 6. Weitere Ausführungen der Erfindung können ebenfalls eine Reihenschaltung der Komponenten 4 oder 5 oder 6 aufweisen. Die Steuereinrichtung 1 kann sowohl den Schalter SA an die Auswerteeinrichtung 7 parallel zu der Sende- und Empfangsspule 3 schalten oder von dieser trennen. Entsprechend kann auch die Auswerteeinrichtung 7 mit über den Schalter SB mit anderen Sensoren 8 verbunden werden.

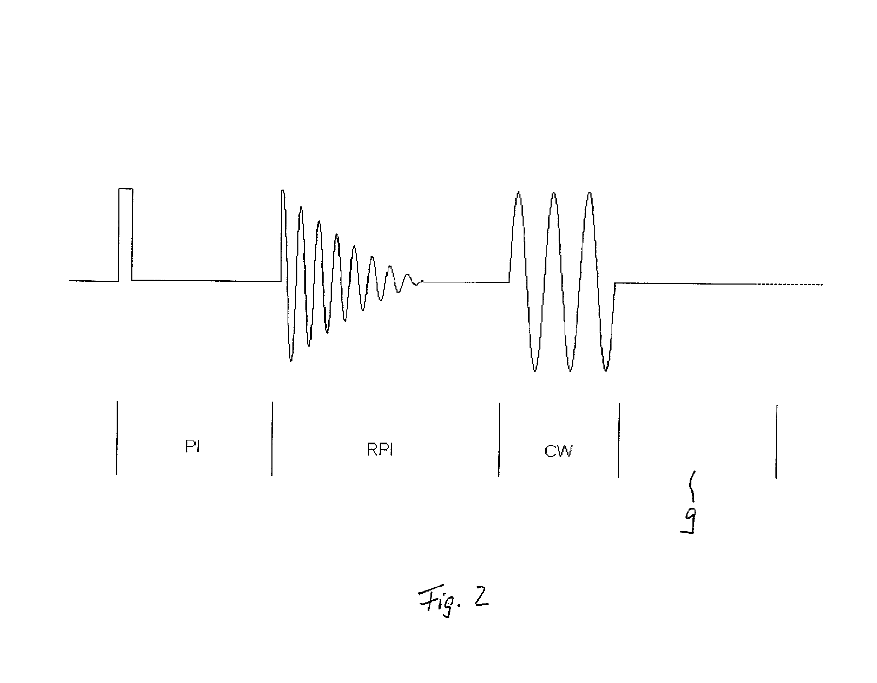

Wie bereits aufgeführt, kann die Steuereinrichtung 1 entsprechend dem jeweiligen Modus für den Sendevorgang Widerstände 4, Kondensatoren 5 und Spule 6 zuschalten und den Sendevorgang durch den Signal-Generator 2 auslösen. Nach Absenden des Signals werden alle Schaltungskomponenten 4, 5 und 6 durch Öffnen der jeweiligen Schalter SR, SC, SL getrennt und der Schalter SA geschlossen, um die Auswerteeinrichtung 7 zuzuschalten. Dies kann in beliebiger Folge mit beliebigen Zuschaltungen der Schaltungskomponenten 4, 5, 6 erfolgen, so dass sich beispielsweise ein in der Figur 2 gezeigte Folge von Pulsen mit verschiedenen Betriebsarten ergibt. Wenn zusätzlich noch von anderen Sensoren ein Signal der Auswerteeinrichtung 7 zugeführt werden soll, das aufgrund einer Synchronisation der Steuereinrichtung 1 mit dem zusätzlichen Sensor 8 ausgelöst wurde, wird die Auswerteeinrichtung 7 über den Schalter SB mit dem Sensor 8 verbunden und über den Schalter SA von der Sende- und Empfangsspule 3 getrennt.

Figur 2 zeigt in einer zeitlichen Folge der Betriebsarten PI, RPI, CW und anschließend eine Pause 9 für eine Betriebsart EXT in der Signale eines anderen Sensors 8 erfasst werden können.

## Patentansprüche

1. Vielfach-Modus-Objektdetektor, **gekennzeichnet durch** eine Sende- und Empfangsspule (3) als Sensor, wahlweise zuschaltbare elektrische Schaltungskomponenten (4, 5, 6), einen Sendesignal-Generator (2) für die Sende- und Empfangsspule (3), eine elektronische Auswerteeinrichtung (7) und eine elektronische Steuereinrichtung (1), wobei die Steuereinrichtung (1) ausgebildet ist, um in beliebiger Folge und Dauer die Ausführung verschiedener Detektionsbetriebsarten zu ermöglichen.

2. Vielfach-Modus-Objektdetektor nach Anspruch 1, **dadurch gekennzeichnet, dass** die zuschaltbaren elektrischen Schaltungskomponenten mindestens ein Widerstand (4) und/oder mindestens ein Kondensator (5) und/oder mindestens eine Spule (6) sind, die über elektronisch steuerbare Schalter (SRk, SCn, SLm) zur der Sende- und Empfangsspule (3) zuschaltbar sind.

3. Vielfach-Modus-Objektdetektor nach Anspruch 1 oder 2, **dadurch gekennzeichnet, dass** die elektronische Signalauswerteeinrichtung (7) mittels elektronischer Schalter (SA, SB) an verschiedene Sensoren (3; 8) schaltbar ist.

4. Vielfach-Modus-Objektdetektor nach einem der vorangegangenen Ansprüche, **dadurch gekennzeichnet, dass** die elektronische Steuereinrichtung (1) den Steuersignal-Generator (2), gegebenenfalls weitere Sensoren (8), die elektronischen Schalter (SRk, SCn, SLm, SA, SB) und die Signalauswerteeinrichtung (7) steuert.

5. Verfahren zur Detektion von Objekten in einem Vielfach-Modus-Objektdetektor, **gekennzeichnet durch**
- Modus abhängiges Zuschalten von elektrischen Bauelementen (4, 5, 6) entsprechend eines vorgegebenen Detektionsmodus zu einer Sende- und Empfangsspule (3) als Sensor;
- Senden eines Detektionssignals mittels eines parallel zu den elektrischen Bauelementen (4, 5, 6) geschalteten Sendesignal-Generators (2);
- Modus abhängiges Zuschalten der elektrischen Bauelemente (4, 5, 6) entsprechend des vorgegebenen Detektionsmodus zu der Sende- und Empfangsspule (3)
- Empfangen des von dem Objekt gelieferten Signals mittels der Sende- und Empfangsspule (3); und
- Auswerten des empfangenen Signals mittels einer parallel zur Sende- und Empfangsspule (3) geschalteten Auswerteeinrichtung (7).

6. Verfahren nach Anspruch 5, **dadurch gekennzeichnet, dass** mittels einer elektronischen Steuereinrichtung (1) entsprechend dem Detektionsmodus elektrische Bauelemente (4, 5, 6) zugeschaltet oder nicht zugeschaltet werden, dann der Sendesignal-Generator (2) zur Abgabe eines Sendesignals veranlasst wird, anschließend entsprechend dem Detektionsmodus elektrische Bauelemente (4, 5, 6) zugeschaltet oder nicht zugeschaltet werden, und die Signalauswerteeinrichtung (7) zugeschaltet und gesteuert wird, um das von der Sende- und Empfangsspule (3) empfangene Signal auszuwerten.

7. Verfahren nach Anspruch 6, **dadurch gekennzeichnet, dass** nacheinander entweder gleiche oder verschiedene Detektionsmodi (PI. PIR, CW) ausgeführt werden.

8. Verfahren nach einem der vorangegangenen Ansprüche 5 bis 7 , **dadurch gekennzeichnet, dass** alternativ mittels der elektrischen Steuereinrichtung (1) weitere Sensoren (8) mit anderen Detektionsmodi gesteuert an die Signalauswerteeinrichtung (7) zwecks Auswertung ihrer Empfangssignale angeschlossen werden.
